Europäisches Patentamt

European Patent Office

Office européen des brevets

(11) Veröffentlichungsnummer: **0 106 259**
**A2**

(12) # EUROPÄISCHE PATENTANMELDUNG

(21) Anmeldenummer: **83109890.0**

(22) Anmeldetag: **04.10.83**

(51) Int. Cl.³: **F 24 F 7/08**
**F 24 F 7/007**

(30) Priorität: **07.10.82 CH 5889/82**

(43) Veröffentlichungstag der Anmeldung:
**25.04.84 Patentblatt 84/17**

(84) Benannte Vertragsstaaten:
**AT BE DE FR GB IT LU NL SE**

(71) Anmelder: **Heinrich Drexl Kommanditgesellschaft**
**Landsberger Strasse 83**
**D-8913 Schondorf(DE)**

(72) Erfinder: **Reber, Bernhard**
**Ziegelhofweg 18**
**CH-8303 Kaiseraugst/AG(CH)**

(74) Vertreter: **Marx, Lothar, Dr.**
**Pirmaterstrasse 3a**
**D-8000 München 70(DE)**

(54) **Wärmerückgewinnungsanlage für ein Gebäude.**

(57) Die Anlage weist einen vor einer Gebäudewand (3) innenseitig angeordneten Abluftkasten (4) auf, der einen zu einem in einer Öffnung (6) in der gleichen Gebäudewand (3) angeordneten Ventilator (7) führenden ersten Abluftkanal (5) bildet. Durch ein den Abluftkasten (4) im Abstand U-förmig umfassendes Gehäuse (10) ist vor dem Abluftkasten (4) zwischen diesem und dem Gehäuse (10) ein zweiter Abluftkanal (11) gebildet, der über eine Öffnung (12) mit dem ersten Abluftkanal (5) in Verbindung steht. Durch eine schwenkbare Klappe (3) ist der erste oder zweite Abluftkanal gegenüber der Saugseite des Ventilators (7) absperrbar, so daß die Abluft über den einen oder den anderen Abluftkanal geleitet wird. Im zweiten Abluftkanal (11) ist ein von der Abluft durchströmtes Wärmetauscherelement (14) angeordnet. Durch das Gehäuse (10) ist ferner auf gegenüberliegenden Seiten an die beiden Abluftkanäle (5, 11) angrenzend je ein an das Wärmetauscherelement (14) angeschlossener Frischluftkanal (15, 16) gebildet. Mit Hilfe eines Ventilators (17) in dem einen Frischluftkanal (16) wird von außen angesaugte Frischluft im Kreuzstrom durch das Wärmetauscherelement (14) geleitet und die erwärmte Frischluft dann in den Gebäudeinnenraum geleitet. Für die Umstellung von Sommerbetrieb auf Winterbetrieb mit Ausnutzung der Abluft zur Frischlufterwärmung braucht nur die Klappe (8) verschwenkt werden.

FIG. 1

EP 0 106 259 A2

# Patentanwalt

## Dipl.-Phys. Dr. Lothar Marx

Firm
D-80(
Telef
Tele›

0106259

Anwaltsakte 7004 EU
Ma/fe

## Wärmerückgewinnungsanlage für ein Gebäude

### Beschreibung

Die Erfindung betrifft eine Wärmerückgewinnungsanlage für ein Gebäude mit Ventilatorunterdrucklüftung, insbesondere für einen Stall.

Für eine gesunde Tierhaltung ist ein möglichst optimales Stallklima Voraussetzung, worunter man die richtige Temperatur, Luftfeuchtigkeit etc. versteht. Für die Sauerstoffversorgung der Tiere wie auch für die Abführung des von den Tieren produzierten Wasserdampfs sowie des ausgeatmeten Kohlendioxyds und des aus den Exkrementen entstehenden Ammoniaks benötigt ein Stall eine ausreichende Lüftung. Während des Sommers hat die Lüftung insbesondere auch die Aufgabe, die von den Tieren produzierte Wärme abzuführen, damit die Stalltemperatur nicht wesentlich über die Außentemperatur steigt. Die Lüftung kann in einfachster Weise über Fenster-und Türöffnungen erfolgen, meistens ist jedoch eine Ventilatorlüftung installiert, mit der eine den jeweiligen Verhältnissen entsprechende Regelung möglich ist. Bei dieser Lüftungsart geht die von den Tieren produzierte Wärme mit der Abluft verloren, wobei es sich um erhebliche Wärmemengen handelt, denn in einem Stall mit

0106259

25 Milchkühen oder 150 Mastschweinen wird eine Wärmemenge von annähernd 20'000 kcal/Std. produziert. Von dieser Wärmemenge gehen ca. 25 % durch Fenster und Türen und ca. 75 % mit der Abluft verloren. Während des Winters läßt sich diese Wärme für die Klimatisierung des Stalls ausnutzen, wenn man die Wärme zurückgewinnt.

Es ist bereits bekannt, dafür Wärmetauscher einzusetzen, mit denen bis 60 % der in der Abluft enthaltenen Wärme zurückgewonnen werden können. Die auf diese Weise gewonnene Energie reicht in den meisten Fällen aus, um auf eine separate Heizanlage für den Winterbetrieb verzichten zu können.

Die der vorliegenden Erfindung zugrundeliegende Aufgabe bestand darin, eine besonders einfache und kostengünstig zu installierende Wärmerückgewinnungsanlage zu schaffen, die soweit möglich unter Verwendung bzw. Einbezug der meistens vorhandenen Lüftungseinrichtung installiert werden kann oder im anderen Fall an die Stelle einer solchen Lüftungseinrichtung tritt, für die eine Wandöffnung, ein Ventilator sowie Energiezuleitungen auf jeden Fall vorhanden sind. Die vorgenannte Aufgabe wird durch eine Wärmerückgewinnungsanlage mit den Merkmalen gemäß Anspruch 1 gelöst.

Bei der Ventilatorbelüftung ist der Ventilator in der Gebäudedecke oder unterhalb derselben in der Aussenwand angeordnet und ist von einem längs der Wand von der Gebäudedecke nach unten sich erstreckenden Abluftkasten verschlossen, durch dessen im Abstand vom Boden sich befindende untere Öffnung die Abluft vom Ventilator hochgesaugt wird. Das von oben gesehen vorzugsweise U-förmig ausgebildete Gehäuse umfaßt den Abluftkasten im Abstand derart, daß vor dem vor dem ersten Abluftkasten gebildeten ersten Abluftkanal ein zweiter Abluftkanal gebildet wird, in dem das Wärmetauscherelement angeordnet ist, wobei dieses Gehäuse derart ausgebildet ist, daß entweder vor einen bestehenden Abluftkanal ein Gehäuse davorgesetzt werden kann, um eine mit einer Lüftungsanlage für den Sommerbetrieb kombinierte Wärmerückgewinnungsanlage zu bilden, oder das Gehäuse mit einem passenden Abluftkasten kombiniert an die Stelle der bisherigen Lüftungseinrichtung gesetzt werden kann. Für die durch eine schwenkbare Klappe verschließbare Verbindungsöffnung zwischen den beiden Abluftkanälen muß in einem bestehenden Abluftkasten nur ein der Größe dieser Öffnung entsprechendes Wandstück herausgeschnitten werden. In bevorzugter Ausgestaltung ist die in der Ebene der den ersten Abluftkanal von dem zweiten Abluftkanal trennenden Wand schwenkbar gelagerte Klappe derart dimensioniert, daß sie wechselweise die Verbindungsöffnung zwischen den beiden Abluftkanälen oder den ersten Abluftkanal unterhalb des Ventilators und der genannten Verbindungsöffnung verschließt, sodaß die Abluft einmal nur durch den ersten Abluftkanal und das andere Mal nur durch den zweiten Abluftkanal vom Ventilator angesaugt werden kann, oder bei einer Zwischenstellung der Klappe auch gleichzeitig durch beide Abluftkanäle abgesaugt werden kann.

Weitere Einzelheiten und Vorteile der Erfindung ergeben sich aus der nachfolgenden Beschreibung und den Zeichnungen, in denen eine Ausführungsform des Erfindungsgegenstandes beispielsweise dargestellt ist. Es zeigen:

Fig. 1 einen Vertikalschnitt durch die Anlage gemäß der Linie II-II in Fig. 2;

Fig. 2 einen Vertikalschnitt durch die Anlage gemäß der Linie I-I in Fig 1;

Fig. 3 einen Horizontalschnitt durch die Anlage gemäß der Linie III-III in Fig. 1;

Fig.4 einen Horizontalschnitt durch die Anlage gemäß der Linie IV-IV in Fig. 1;

Fig.5 u. 6 ein weiteres Ausführungsbeispiel der Anlage.

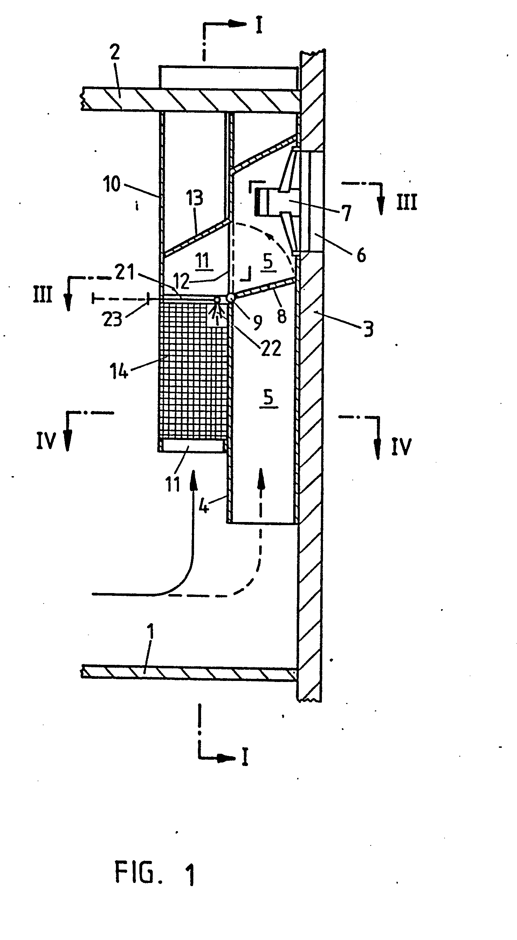

Gemäß Fig. 1 ist an der zwischen dem Boden 1 und der Decke 2 sich erstreckenden Außenwand 3 eines Gebäudes oder Stalls ein Ablüftkasten 4 fest angeordnet, durch den ein erster Abluftkanal 5 gebildet ist, durch den die Abluft mittels eines vor einer Wandöffnung 6 innenseitig angeordneten Ventilators 7 aus dem Gebäuderaum gefördert wird. In der Darstellung gemäß Fig. 1 ist dieser Förderweg für die Abluft durch eine Klappe 8 verschlossen, die um eine Achse 9 schwenkbar ist und die in der Pfeilrichtung aufwärts in eine vertikale Stellung geschwenkt werden kann.

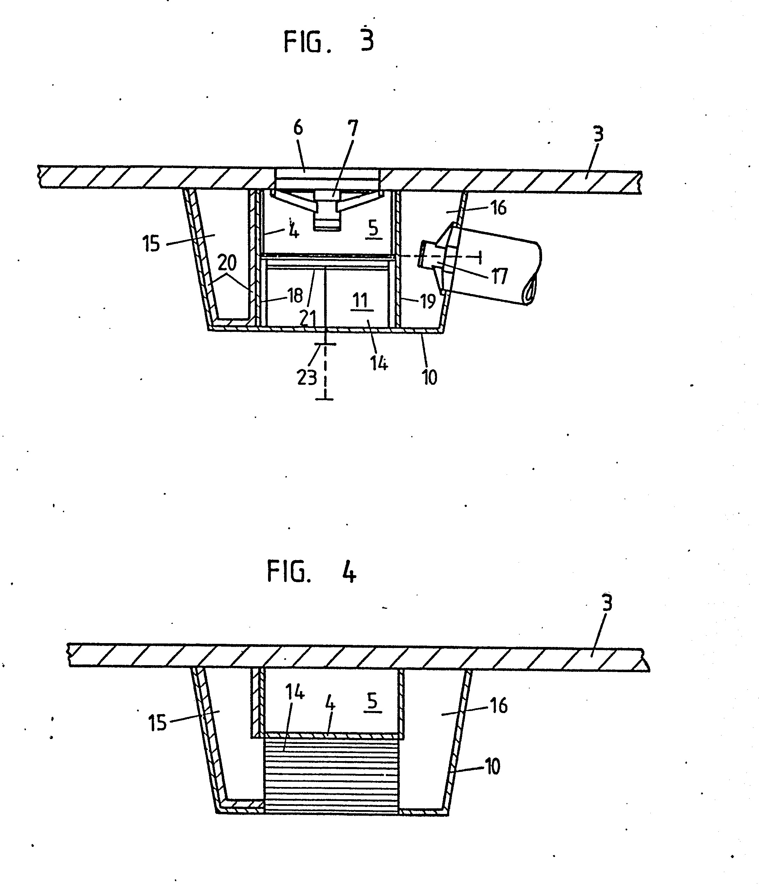

Durch ein den Abluftkasten 4 allseitig im Abstand umfassendes, im Horizontalschnitt gemäß Fig. 3 U-förmig ausgebildetes Gehäuse 10, das sich bis an die Gebäudewand 3 erstreckt, ist vor dem Abluftkasten 4 ein zweiter Abluftkanal 11 gebildet, der über eine durch die Klappe 8 verschließbare Öffnung 12 mit dem ersten Abluftkanal 5 in Verbindung steht. Nach oben ist dieser zweite Abluftkanal 11 durch eine schräge Leitfläche 13 begrenzt, die sich bis zur Verbindungsöffnung 12 erstreckt und mit der dort befindlichen Endkante den oberen Rand dieser Verbindungsöffnung 12 bildet. In diesem zweiten Abluftkanal 11 ist ein Wärmetauscherelement 14 angeordnet, das den lichten Querschnitt des Abluftkanals 11 ausfüllt, sodaß die gesamte Abluft durch dieses Wärmetauscherelement hindurchströmen muß. Das Wärmetauscherelement 14 ist zweckmäßig zum Auswechseln nach vorne herausnehmbar. Es können auch getrennt herausnehmbare, identische Wärmetauscherelemente nebeneinander angeordnet sein. Das oder die Wärmetauscherelemente können aus einem Glasrohrwärmetauscher oder einem Plattenwärmetauscher oder einem Folienwärmetauscher bestehen, welche bekannte Typen der hierfür geeigneten Wärmetauscher darstellen.

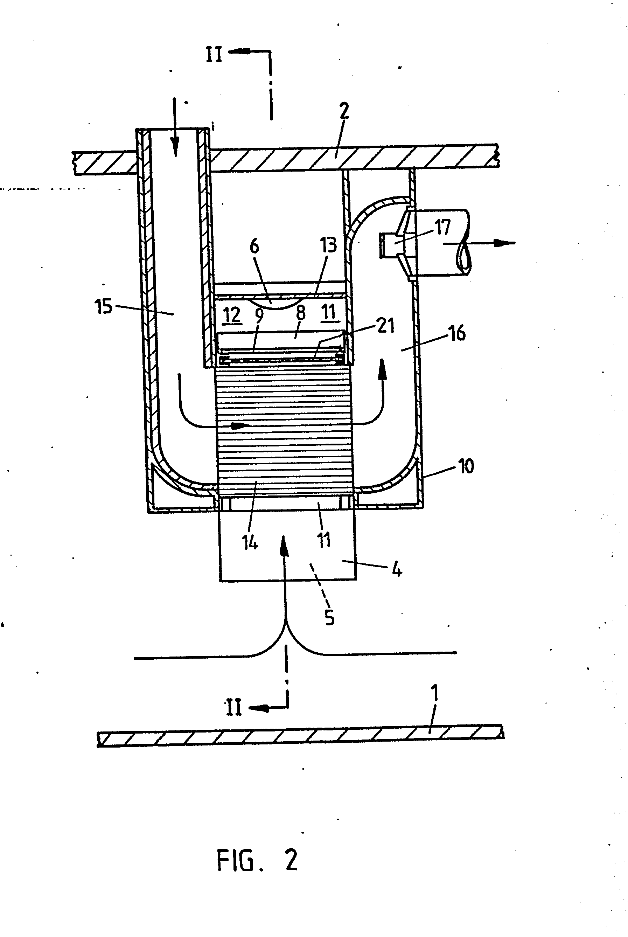

Wie aus Fig. 3 erkennbar ist, ist durch das Gehäuse 10 ferner auf gegenüberliegenden Seiten an die beiden Abluftkanäle 5 und 11 angrenzend je ein Frischluftkanal 15 und 16 gebildet, die beide an das Wärmetauscherelement 14 angeschlossen sind, wie aus Fig. 2 und 4 hervorgeht, um von außen angesaugte Frischluft durch das Wärmetauscherelement 14 hindurchzufördern. Dabei führt der eine Frischluftkanal 15 oberhalb der Gebäudedecke 2 nach außen bzw. in den Dachraum, während nahe des oberen Endes des anderen Frischluftkanals 16 ein weiterer Ventilator 17 angeordnet ist, der die Frischluft durch das Wärmetauscherelement 14 ansaugt und die dabei erwärmte Frischluft dann in den Gebäudeinnenraum ausbläst.

Durch das gemäß Fig. 3 den Abluftkasten 4 im Abstand U-förmig umschließende Gehäuse 10 ist zwischen dem Abluftkasten 4 und dem Gehäuse 10 ein von den beiden Frischluftkanälen 15 und 16 und dem dazwischen sich erstreckenden zweiten Abluftkanal 11 gebildeter U-förmiger Zwischenraum vorhanden, der durch vom oberen Ende des Gehäuses 10 bis zur Oberkante des Wärmetauscherelementes 14 sich erstreckende innere Trennwände 18 und 19 unterteilt ist. Bei einem bestehenden Abluftkasten 4 braucht das Gehäuse 10 dann nur mit diesen Trennwänden ausgestattet zu werden. Der Frischluftkanal 15 ist innenseitig mit einer Schicht 20 aus Isolationsmaterial ausgekleidet, um nachteilige Wirkungen der durch die kalte Frischluft auftretenden Kondensation zu vermeiden.

Das Wärmetauscherelement 14, das beispielsweise ein Glasrohrwärmetauscher sein kann, bei dem die Frischluft durch die Glasrohre hindurch und die Abluft außen um die Glasrohre durch die Zwischenräume zwischen diesen strömt, muß in Zeitabständen gereinigt werden, da die Abluft in einem Stall ziemlich staubhaltig ist. Zu diesem Zweck ist oberhalb des Wärmetauscherelementes 14 eine Wascheinrichtung 21 angeordnet, die in einer Reihe angeordnete Spritzdüsen 22 aufweist, von denen in Fig. 1 eine Spritzdüse dargestellt ist, und die von außen mittels einer Betätigungsstange 23 quer über das Wärmetauscherelement 14 bewegbar ist.

Mit der Wärmerückgewinnungsanlage, die in der vorstehend beschriebenen kompakten Bauweise mit der Belüftungseinrichtung eine Einheit bildet, können bis 60 % der in der Abluft enthaltenen Wärme zurückgewonnen werden. Das ist in der Mehrzahl der Fälle ausreichend, um auf eine andere Heizanlage verzichten zu können, sodaß sich die Investitionskosten in kurzer Zeit bezahlt machen. Nur durch das Umschwenken einer einfachen Klappe kann die Abluft entweder für den Winterbetrieb durch das Wärmetauscherelement oder für den Sommerbetrieb direkt ins Freie geleitet werden.

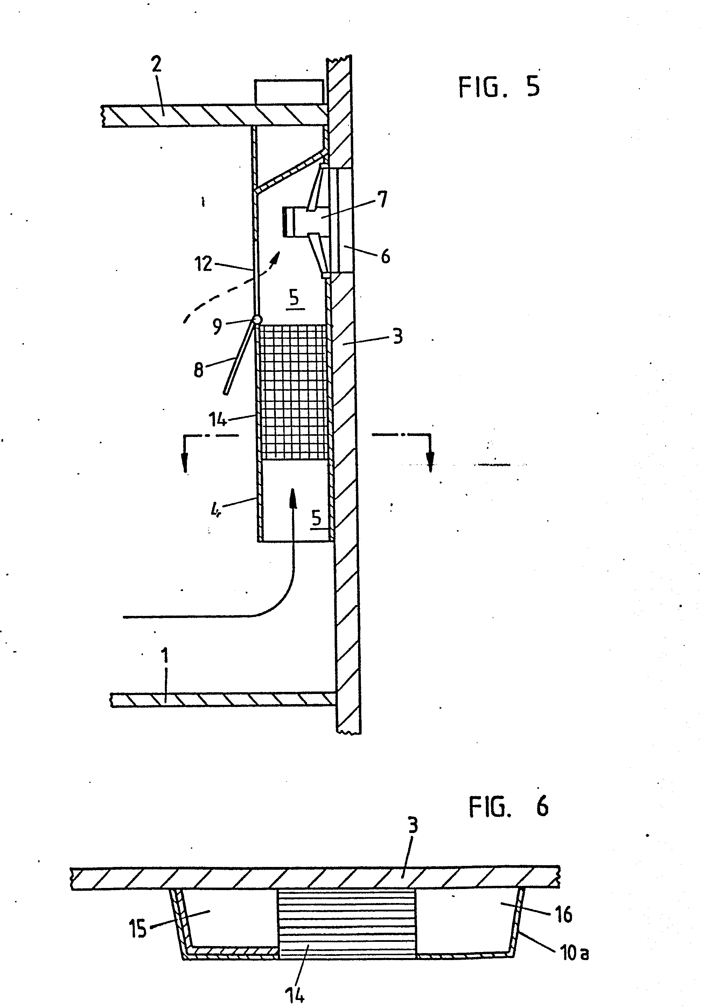

Bei einer abgewandelten vereinfachten Ausführungsform gemäß Fig. 5 und 6 ist das Wärmetauscherelement 14 in dem eventuell bereits bestehenden Abluftkasten 4 auswechselbar angeordnet, sodaß nur ein von dem Abluftkasten 4 gebildeter Abluftkanal 5 vorhanden ist. In diesem ist in übereinstimmender Weise wie bei der Ausführungsform gemäß Fig. 1 bis 4 oberhalb des Wärmetauscherelementes 14 eine durch die Klappe 8 verschließbare Öffnung 12 ausgebildet, wobei diese Klappe zwecks Öffnen nach außen schwenkbar

0106259

ist. Dann wird die Abluft zum überwiegenden Teil auf dem direkten Weg abgesaugt und nur ein kleiner Teil gelangt wegen des größeren Widerstandes auf dem Weg durch das Wärmetauscherelement ins Freie. Die beiden Frischluftkanäle 15 und 16 haben bei dieser Ausführungsform einen anderen Querschnitt und sind von einem nur den Abluftkasten 4 auf gegenüberliegenden Seiten im Abstand umschließenden Gehäuse 10 a gebildet.

# Patentanwalt

## Dipl.-Phys. Dr. Lothar Marx

Pirm
D-80(
Telef
Tele>

0106259

Anwaltsakte 7004/EU

28. Sep. 1983

Heinric h  Drexl Kommanditgesellschaft
Landsberger Straße 83


8913 Schondorf


---

## Wärmerückgewinnungsanlage für ein Gebäude

---


### Patentansprüche


1. Wärmerückgewinnungsanlage für ein Gebäude mit Ventilatorlüftung, insbesondere für einen Stall, dadurch gekennzeichnet, daß

a) in einem auf der Saugseite des Lüftungsventilators (7) wandparallel sich erstreckenden Abluftkanal (5 oder 11) mindestens ein Wärmetauscherelement (14) auswechselbar angeordnet ist, daß

b) oberhalb des Wärmetauscherelementes (14) eine durch eine schwenkbare Klappe (8) verschließbare Öffnung (12) in der Kanalwand vorgesehen ist, um die Abluft je nach Stellung der Klappe (8) mittels des Ventilators (7) durch das Wärmetauscherelement (14) hindurch oder direkt abzuführen und daß

c) auf gegenüberliegenden Seiten je ein Frischluftkanal (15, 16) an das Wärmetauscherelement (14) angeschlossen ist zwecks Hindurchleiten von durch den einen Frischluftkanal (15) angesaugter, durch das Wärmetauscherelement (14)

7004 EU — 2 —

im Kreuzstrom zur Abluft geführter und mittels eines im anderen Frischluftkanal angeordneten weiteren Ventilators (17) ausgeblasener, erwärmter Frischluft.

2. Wärmerückgewinnungsanlage nach Anspruch 1, dadurch gekennzeichnet, daß ein auf der Saugseite des Lüftungsventilators (7) wandinnenseitig angeordneter Abluftkasten (4), der einen kaminartigen, zum Ventilator(7) führenden ersten Abluftkanal (5) bildet, im Abstand von einem Gehäuse (10) umfaßt ist, durch welches zwischen dem Abluftkasten (4) und dem Gehäuse (10) an der Vorderseite ein vor dem ersten Abluftkanal (5) sich erstreckender und über eine durch eine schwenkbare Klappe(8) verschließbare Öffnung (12) mit dem ersten Abluftkanal(5) nahe des Ventilators (7) in Verbindung stehender zweiter Abluftkanal (11) mit mindestens einem darin auswechselbar angeordneten Wärmetauscherelement (14) und ferner auf gegenüberliegenden Seiten an die beiden Abluftkanäle (5, 11) angrenzend je ein an das Wärmetauscherelement(14) angeschlossener Frischluftkanal (15, 16) gebildet ist.

3. Anlage nach Anspruch 2, dadurch gekennzeichnet, daß das Gehäuse (10) von oben gesehen U-förmig ausgebildet ist und daß vom oberen Ende des Gehäuses (10) bis zur Oberkante des Wärmetauscherelementes (14) sich erstreckende innere Trennwände (18, 19) den von den beiden Frischluftkanälen (15, 16) und dem dazwischen sich erstreckenden zweiten Abluftkanal (11) gebildeten U-förmigen Zwischenraum zwischen Abluftkasten (4) und Gehäuse (10) oberhalb des Wärmetauscherelementes (14) unterteilen.

4. Anlage nach Anspruch 2, dadurch gekennzeichnet, daß der zweite Abluftkanal (11) durch eine im Abstand oberhalb des Wärmetauscherelementes (14) angeordnete schräge Leitfläche (13) begrenzt ist, die sich bis zur Verbindungsöffnung (12) zwischen dem zweiten und dem ersten Abluftkanal erstreckt und mit ihrer Endkante den oberen Rand dieser Verbindungsöffnung (12) bildet.

5. Anlage nach Anspruch 2 und 4, dadurch gekennzeichnet, daß die in der Ebene der den ersten Abluftkanal (5) von dem zweiten Abluftkanal (11) trennenden Wand schwenkbar gelagerte Klappe (8) derart dimensioniert ist, daß sie wechselweise die Verbindungsöffnung (12) zwischen den beiden Abluftkanälen (5, 11) für den Sommerbetrieb der Anlage oder den ersten Abluftkanal (5) unterhalb des Ventilators (7) und der genannten Verbindungsöffnung (12) für den Winterbetrieb der Anlage verschließt.

6. Anlage nach Anspruch 2, dadurch gekennzeichnet, daß das mindestens ein Wärmetauscherelement (14) zum Auswechseln nach vorne aus dem zweiten Abluftkanal (11) herausnehmbar ist und aus einem Glasrohrwärmetauscher oder einem Plattenwärmetauscher oder einem Folienwärmetauscher besteht.

7. Anlage nach Anspruch 2, dadurch gekennzeichnet, daß oberhalb des Wärmetauscherelementes (14) eine Wascheinrichtung (21) mit quer über das Wärmetauscherelement(14) bewegbaren Spritzdüsen (22) angeordnet ist.

8. Anlage nach Anspruch 2 und 3, dadurch gekennzeichnet, daß das Gehäuse (10) einschließlich der inneren Trennwände (18, 19) derart ausgebildet ist, daß ein bestehender Abluftkasten (4) mit dem Gehäuse zwecks Bildung einer Wärmerückgewinnungsanlage ergänzbar ist.

9. Anlage nach Anspruch 1, dadurch gekennzeichnet, daß das Wärmetauscherelement (14) in einem wandinnenseitig angeordneten, einen kaminartigen zum Ventilator führenden Abluftfkanal (5) bildenden Abluftkasten (4) angeordnet ist, daß die Öffnung (12) im Abluftkasten (4) oberhalb des Wärmetauscherelementes (14) verschließende Klappe (8) nach außen schwenkbar ist und daß durch ein den Abluftkasten (4) auf gegenüberliegenden Seiten im Abstand umschließendes Gehäuse (10a) die beiden seitlichen

0106259

Frischluftkanäle (15, 16) gebildet sind.

0106259

FIG. 1

FIG. 2

0106259

FIG. 3

FIG. 4

FIG. 5

FIG. 6